# EUROPÄISCHE PATENTSCHRIFT

(11) **EP 2 934 237 B1**
(45) Veröffentlichungstag und Bekanntmachung des Hinweises auf die Patenterteilung: **21.02.2018**
(21) Anmeldenummer: 13831964.5
(22) Anmeldetag: 19.12.2013
(51) Int. Cl.: A47B 91/02

(54) **HAKENTEIL**
HOOK PART
ÉLÉMENT CROCHET

(30) Priorität: 21.12.2012 DE 202012012380 U
(43) Veröffentlichungstag der Anmeldung: 28.10.2015
(73) Patentinhaber: Tegometall International AG, 8574 Lengwil (CH)
(72) Erfinder: BOHNACKER, Ulrich, CH-8559 Fruthwilen (CH)
(74) Vertreter: Strehl Schübel-Hopf & Partner
(86) Internationale Anmeldenummer: PCT/EP2013/077373
(87) Internationale Veröffentlichungsnummer: WO 2014/096190

(56) Entgegenhaltungen:
- EP-A1- 1 917 887
- EP-A2- 0 363 036
- GB-A- 2 325 398
- US-A- 3 899 857
- US-A- 4 850 162

## Beschreibung

In Regalsystemen ist die spielfreie und zuverlässige Verbindung des Fußteils mit den hinteren Säulen wichtig. Gerade in Regalsystemen des Ladenbaus, die regelmäßig hohe Lasten zu tragen haben, ist diese Verbindung für die Statik des Regalsystems, insbesondere im Hinblick auf die Gefahr des Umkippens, von großer Bedeutung.

Bekannt sind Regalsysteme, deren hinteren Säulen Rechtecklöcher aufweisen, in die über sogenannte Hakenteile unten das auslegerartig geformte Fußteil und weiter oben die Regalkonsolen eingeklinkt werden können. Die Hakenteile werden auf einer Seite am Fußteil befestigt, zum Beispiel durch Schweißen, und auf der anderen Seite in die Rechtecklöcher der entsprechenden hinteren Säule eingeklinkt. Um eine drehmomentsteife Verbindung zu gewährleisten, sind typischerweise zwei Hakenteile, ein oberes und ein unteres, zur Verbindung mit der jeweiligen hinteren Säule vorgesehen. EP 0 363 036 A2 offenbart ein gattungsgemäßes Hakenteil. In den Figuren 4 und 5 sind ein Fußteil mit darin befestigten bekannten Hakenteilen und eine Rechtecksäule mit Löchern vor bzw. nach dem Einklinken ineinander gezeigt.

Die Hakenteile können dabei je nach Hersteller und vorgesehener Belastung verschieden Ausprägungen in Hinsicht auf Form, Materialstärke und Befestigung am Fußteil haben.

Ein bekanntes unteres Hakenteil wird dabei aus einem Vierkantmaterial durch mechanische Bearbeitungsschritte wie Sägen, Fräsen, Bohren, Gewindeschneiden und Bohren hergestellt. Es wird auf einer Seite in den Holm eines Fußteils eingebracht und dort mit diesem durch Punktschweißungen verbunden. Auf dieser Seite weist es zudem ein von unten nach oben verlaufendes Gewindeloch auf, in dem ein Fußteller des Fußteils eingeschraubt wird. Auf seiner anderen, aus dem Fußteilholm herausragenden Seite ist es so geformt, dass es in die hintere Säule eingehakt werden kann.

Ein weiteres bekanntes Hakenteil ist ein Schmiedeteil, das zusätzlich mechanisch bearbeitet ist (durch Bohren und Fräsen) und das in einen rohrartigen Fußteilholm eingebracht und verschweißt wird.

Beide oben beschriebenen Hakenteile weisen ein relativ hohes Gewicht auf und erfordern eine aufwendige mechanische Bearbeitung. Entsprechend sind sowohl Materialpreis als auch Bearbeitungskosten vergleichsweise hoch.

Der Erfindung liegt die Aufgabe zugrunde, ein Hakenteil mit den erforderlichen Stabilisierungseigenschaften und mit geringeren Material- und Bearbeitungskosten herzustellen. Eine weitere Aufgabe besteht darin, ein Hakenteil zu finden, dass gleichermaßen für Holme von Blechfußteilen und für rohrartige Fußteilholme verwendet werden kann.

Das erfindungsgemäße Hakenteil ist in Anspruch 1 definiert. Ein aus Blechteilen schichtartig aufgebautes Hakenteil benötigt bei vergleichbaren Stabilitätseigenschaften weniger Material als ein massives Hakenteil (wie ein Vierkant- oder Schmiedehakenteil). Zudem ist die Verarbeitung der Blechteile kostengünstiger als die Verarbeitung eines massiven Hakenteils.

Die Weiterbildungen nach den Ansprüchen 2 und 3 gewährleisten bei Beibehaltung des einfachen Aufbaus und der einfachen Verarbeitung die Einklink- bzw. Einhakbarkeit des Hakenteils in die Säule. Die Weiterbildung des Anspruchs 4 betrifft die Verbindung des Hakenteils mit dem Fußteil und dessen hinterem Fuß. Die verbleibenden Ansprüche führen weitere vorteilhafte Merkmale auf.

Ein Ausführungsbeispiel der vorliegenden Erfindung wird nachstehend anhand der Zeichnungen näher erläutert.
Figur 1 zeigt eine perspektivische Ansicht des erfindungsgemäßen Hakenteils des Ausführungsbeispiels und des hinteren unteren Endes des Fußteilholms;
Figur 2 zeigt eine Seitenansicht des Fußteilauslegers mit darin befestigtem erfindungsgemäßen Hakenteil;
Figur 3 zeigt eine Draufsicht von oben auf den Fußteilausleger mit darin befestigtem erfindungsgemäßen Hakenteil;
Figur 4 zeigt eine perspektivische Ansicht des Fußteilauslegers mit darin befestigtem bekannten Hakenteil und der Regalsäule vor dem Einklinken;
Figur 5 zeigt eine perspektivische Ansicht des Fußteilauslegers und der Regalsäule nach dem Einklinken der bekannten Hakenteile in die Regalsäule:
Figur 6 zeigt eine Draufsicht von oben auf das erfindungsgemäße Hakenteil;
Figur 7 zeigt eine Seitenansicht des erfindungsgemäßen Hakenteils;
Figur 8 zeigt eine Rückansicht des erfindungsgemäßen Hakenteils von hinten.

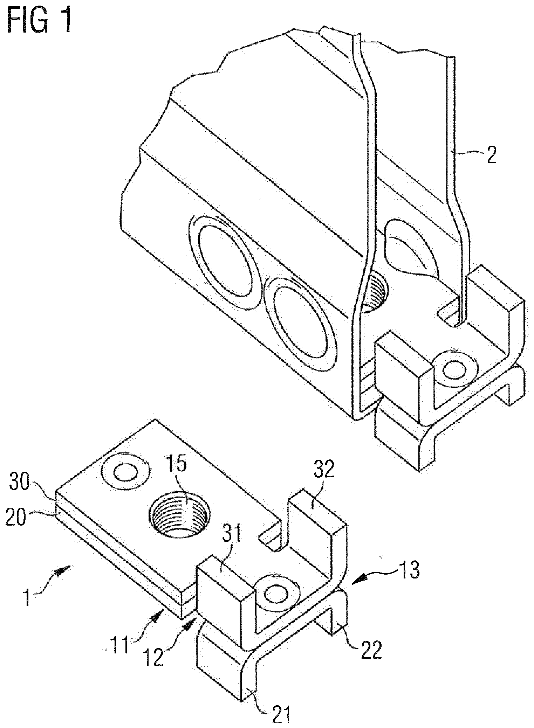

Das in Figur 1 gezeigte Hakenteil 1 des Ausführungsbeispiels ist aus einem oberen Blechteil 20 und einem unteren Blechteil 30 zusammengefügt. Das Hakenteil hat einen vorderen Abschnitt 11 zur Befestigung in einem Fußteil 2, einen hinteren Abschnitt 13 zum Einklinken in eine Regalsäule 3 sowie einen schmaleren Zwischenabschnitt 12 zwischen dem vorderen und dem hinteren Abschnitt 11 bzw. 13. Im vorderen Abschnitt 11 verläuft ein Gewindeloch 15 durch die beiden Blechteile 20, 30 hindurch. Im hinteren Abschnitt sind Seitenteile 21, 22 des ersten Blechteils 20 nach oben umgeklappt, während entsprechende gegenüberliegende Seitenteile 31, 32 des unteren Blechteils nach unten umgeklappt sind. Die nach unten umgeklappten Seitenteile des zweiten Blechteils sind dabei vorzugsweise länger als die nach oben umgeklappten Seitenteile des ersten Blechteils. Sie können aber auch gleich lang oder kürzer sein. Der Umklappwinkel kann bei den Seitenteilen beider Blechteile 90° betragen oder auch bei mindestens einem der beiden von 90° abweichen.

Die beiden Blechteile sind durch zwei Punktschweißungen oder durch Clinchen, gegebenenfalls zusätzlich durch Crimpen, im vorderen und im hinteren Abschnitt miteinander verbunden. Es können jedoch auch mehr Schweißpunkte oder andere Verbindungsarten verwendet werden.

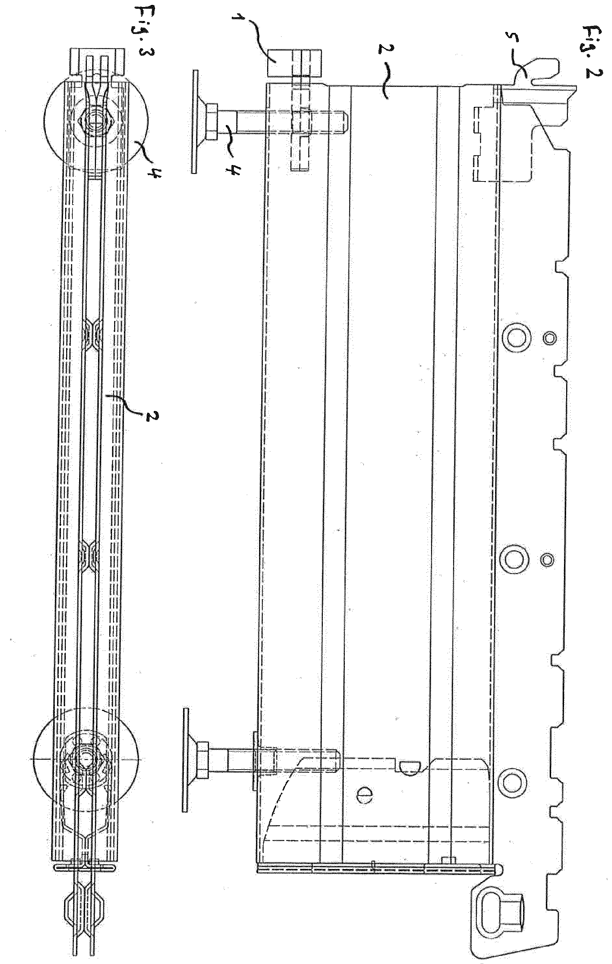

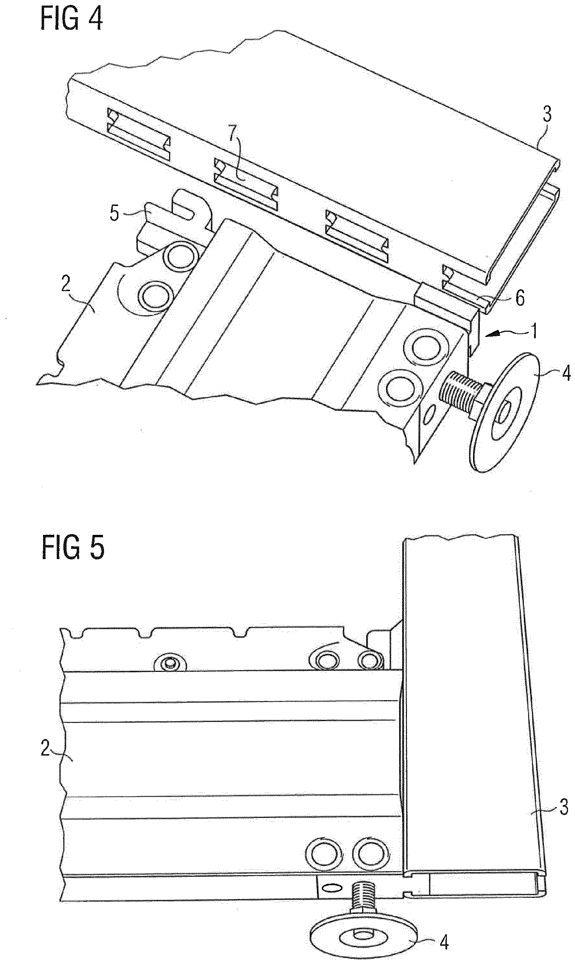

Die Figuren 2 und 3 zeigen den Fußteilausleger 2 mit den darin befestigten unteren und oberen Hakenteilen 1 und 5. Das untere Hakenteil 1 ist das in Figur 1 abgebildete Hakenteil. Es wird von unten in ein unterstes Loch 6 einer Regalsäule 3 wie der in Figur 4 dargestellten eingeklinkt, während das obere Hakenteil 5 in ein Loch 7 der Regalsäule 3 eingeklinkt wird. Das unterste Loch 6 grenzt an die Unterkante der Vorderseite der Säule 3 und ist nach unten offen. Daher kann das untere Hakenteil von unten in die Regalsäule geschoben werden, so dass der hintere Abschnitt des Hakenteils innerhalb der Säule und der Zwischenabschnitt im Loch angeordnet ist. Der hintere Abschnitt 13 des Hakenteils ist dabei so ausgebildet, dass er das Innere der Säule möglichst weitgehend ausfüllt und seine Breite größer als die Breite des Säulenlochs ist.

Der Fußteilausleger weist einen hinteren Fuß 4 auf, dessen Gewindeschaft 14 im Innern des Fußteilauslegers 2 im Gewindeloch 15 im Hakenteil eingeschraubt ist. Der vordere Abschnitt 11 des Hakenteils ist so ausgebildet, dass er das Innere des Fußteilholms möglichst weitgehend ausfüllt. Zudem ist er, vorzugsweise durch Punktschweißen oder Schutzgasschweißen, mit dem Fußteilholm von innen fest verbunden. Das Fußteil kann als rohrartig ausgebildet oder aus Blechen zusammengesetzt sein.

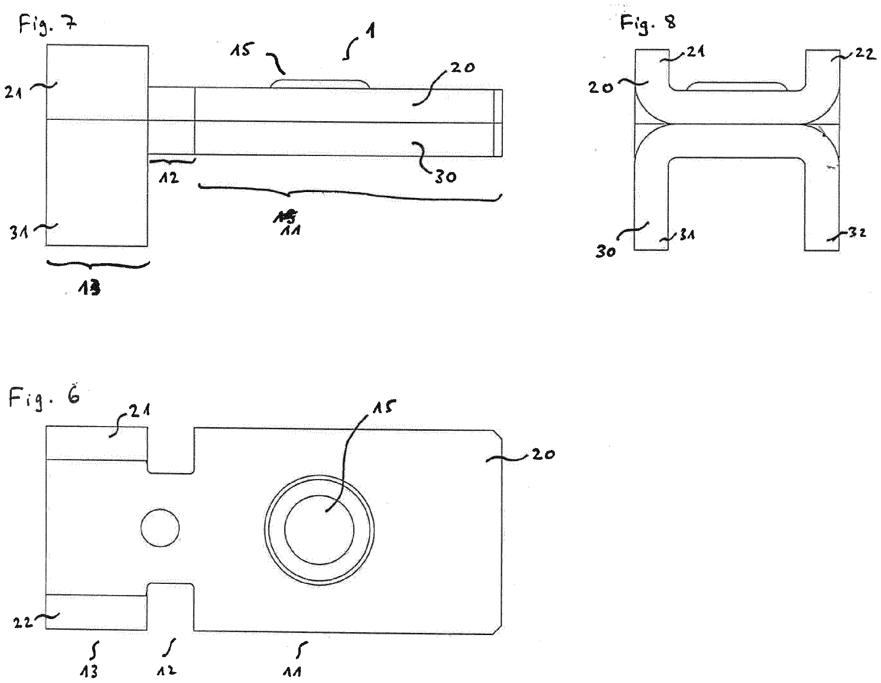

In den Figuren 6 bis 8 ist das Hakenteil noch einmal von allen Seiten dargestellt. Abweichungen von dieser Form sind möglich, solange der schichtartige Aufbau und die Einhak- oder Einklinkfunktion des Hakenteils gewährleistet bleiben. Eine dritte oder weitere Blechteilschichten sind ohne weiteres denkbar.

Das Hakenteil dieses Ausführungsbeispiels kann aus Stahl hergestellt sein. In diesem Fall beträgt sein Gewicht ca. 100 g, während entsprechende gefräste bzw. geschmiedete Hakenteile um ca. 200 g wiegen. Es kann auf einer vollautomatischen Presse mit Coil-Zuführung gefertigt werden, wobei die beiden Blechteile automatisch zusammengeschweißt werden und ein M10-Gewindeloch eingeformt wird. Gegenüber den bisher eingesetzten Hakenteilen konnten so eine vielfach verbesserte Taktzeit und ein deutlich verringerter Personalaufwand erreicht werden. Die Herstellungskosten werden so deutlich verringert.

Das Hakenteil des Ausführungsbeispiels gewährleistet eine hohe Kippsicherheit für das Regalsystem. Bei der Verwendung des Regalsystems in Ladenbaueinrichtungen sind die Gewichtsbelastungen in der Regel besonders hoch, so dass die Zuverlässigkeit einer spielfreien und drehmomentsteifen Verbindung der Regalsäulen mit den Fußteilen gerade über die unteren Hakenteile von großer Bedeutung ist.

## Patentansprüche

1. Hakenteil zur Verbindung eines Fußteils (2) mit einer Säule (3) in einem Regalsystem,
wobei das Hakenteil aus mindestens zwei Blechteilen (20, 30) schichtartig zusammengefügt ist; wobei die Oberseite des Hakenteils durch die Oberseite eines ersten Blechteils (20) gebildet wird, während die Unterseite des Hakenteils durch die Unterseite eines zweiten Blechteils (30) gebildet wird,
wobei ein vorderer Abschnitt (11) des Hakenteils dazu ausgelegt ist, im Fußteil befestigt zu werden, und ein hinterer Abschnitt (13) des Hakenteils dazu ausgelegt ist, in ein nach unten offenes Loch (6) am unteren Ende der Vorderseite der Säule (3) eingeklinkt zu werden und so an der Säule befestigt zu werden,
wobei seitliche Teile (21, 22) des ersten Blechteils (20) und seitliche Teile (31, 32) des zweiten Blechteils (30), die jeweils zum hinteren Abschnitt (13) gehören, jeweils nach oben und nach unten umgeklappt sind, um das Einklinken des hinteren Abschnitts in das entsprechend geformte Loch in der Säule (3) zu ermöglichen, und **dadurch gekennzeichnet, dass** der vordere Abschnitt (11) ein durch die mindestens zwei Blechteile verlaufendes Durchgangsloch (15) mit einem Gewinde für das Einschrauben eines mit einem passenden Gewinde versehenen Fußschafts (14) eines Fußes (4) des Fußteils (2) aufweist.

2. Hakenteil nach Anspruch 1,
wobei die nach oben umgeklappten seitlichen Teile (21, 22) des ersten Blechteils (20) kürzer in der vertikalen Richtung sind als die nach unten umgeklappten seitlichen Teile (31, 32) des zweiten Blechteils (30).

3. Hakenteil nach Anspruch 2,
wobei die nach oben umgeklappten seitlichen Teile (21, 22) des ersten Blechteils (20) und die nach unten umgeklappten seitlichen Teile (31, 32) des zweiten Blechteils (30) in der vertikalen Richtung gleich lang sind.

4. Hakenteil nach einem der vorhergehenden Ansprüche,
wobei das Hakenteil einen Zwischenabschnitt (12) zwischen dem vorderen und dem hinteren Abschnitt (11, 13) aufweist, der schmaler als der vordere und der hintere Abschnitt ist.

5. Hakenteil nach einem der vorhergehenden Ansprüche,
wobei die mindestens zwei Blechteile (20, 30) aneinander geschweißt oder auf andere Weise, beispielsweise durch Clinchen und/oder Crimpen, miteinander verbunden sind.

6. Hakenteil nach einem der vorhergehenden Ansprüche, das genau zwei Blechteile, das erste (20) und das zweite (30), umfasst.

7. Hakenteil nach einem der Ansprüche 1 bis 4, das drei, vier oder mehr Blechteile (20, 30) umfasst.

8. Hakenteil nach einem der vorhergehenden Ansprüche, das nur aus den mindestens zwei Blechteilen (20, 30) besteht.

9. Hakenteil nach einem der vorhergehenden Ansprüche, ausgelegt zur Verwendung in Regalsystemen in Ladenbaueinrichtungen.

## Claims

1. Hook element for connecting a base element (2) with a column (3) in a rack system,
wherein the hook element is formed of at least two sheet metal parts (20, 30) in a layered configuration;
wherein the upper side of the hook element is formed by the upper side of a first sheet metal part (20), while the lower side of the hook element is formed by the lower side of a second sheet metal part (30),
wherein a front portion (11) of the hook element is configured such as to be fixed in the base element, and a back portion (13) of the hook element is configured such as to be engaged with a hole (6) which is open towards the bottom and provided at the lower end of the front side of the column, and so to be fixed to the column,
wherein side parts (21, 22) of the first sheet metal part (20) and side parts (31, 32) of the second sheet metal part (30), respectively forming part of the back portion (13), are flapped upwards and downwards, respectively, in order to allow the engagement of the back portion into an accordingly shaped hole in the column (3), and
**characterized in that** the front portion (11) comprises a throughhole (15) extending through the at least two sheet metal parts and provided with a thread for allowing a foot shaft (14) of a foot (4) of the base element (2) with an appropriate thread to be screwed into it.

2. Hook element according to claim 1,
wherein the upwards-flapped side parts (21, 22) of the first sheet metal part (20) are shorter in the vertical direction than the downwards-flapped side parts (31, 32) of the second sheet metal part (30).

3. Hook element according to claim 1,
wherein the upwards-flapped side parts (21, 22) of the first sheet metal part (20) and the downwards-flapped side parts (31, 32) of the second sheet metal part (30) are equally long in the vertical direction.

4. Hook element according to any one of the preceding claims,
wherein the hook element comprises an intermediate portion (12) between the front and back portions (11, 13), which is narrower than the front and back portions.

5. Hook element according to any one of the preceding claims,
wherein the at least two sheet metal parts (20, 30) are welded onto each other or are bonded to each other in a different manner, for example by clinging and/or crimping.

6. Hook element according to any one of the preceding claims, comprising precisely two sheet metal elements, namely the first one (20) and the second one (30).

7. Hook element according to any one of claims 1 to 4, comprising three, four or more sheet metal parts (20, 30).

8. Hook element according to any one of the preceding claims, consisting only of the at least two sheet metal parts (20, 30).

9. Hook element according to any one of the preceding claims, configured to be used in rack systems for shop fitting.

## Revendications

1. Elément de crochet pour raccorder un élément de base (2) avec une colonne (3) dans un système de support de rangement,
dans lequel l'élément de crochet est formé avec au moins deux parties de métal en feuille (20, 30) dans une configuration à couches ;
dans lequel le côté supérieur de l'élément de crochet est formé par un côté supérieur d'une première partie de métal en feuille (20), alors que le côté inférieur de l'élément de crochet est formé par le côté inférieur d'une seconde partie de métal en feuille (30),
dans lequel une partie avant (11) de l'élément de crochet est configurée afin d'être fixée dans l'élément de base, et une partie arrière (13) de l'élément de crochet est configurée afin d'être mise en prise avec un trou (6) qui est ouvert vers le fond et prévu au niveau de l'extrémité inférieure du côté avant de la colonne, et afin d'être fixée sur la colonne,
dans lequel des parties latérales (21, 22) de la première partie de métal en feuille (20) et des parties latérales (31, 32) de la seconde partie de métal en feuille (30), faisant respectivement partie de la partie arrière (13), sont rabattues vers le haut et vers le bas, respectivement, afin de permettre la mise en prise de la partie arrière dans un trou formé de manière correspondante dans la colonne (3), et
**caractérisé en ce que** la partie avant (11) comprend un trou débouchant (15) s'étendant à travers les au moins deux parties de métal en feuille et prévu avec un filetage pour permettre à un arbre de pied (14) d'un pied (4) de l'élément de base (2) avec un filetage approprié, d'être vissé dans ce dernier.

2. Elément de crochet selon la revendication 1,
dans lequel les parties latérales rabattues vers le haut (21, 22) de la première partie de métal en feuille (20) sont plus courtes dans la direction verticale que les parties latérales rabattues vers le bas (31, 32) de la seconde partie de métal en feuille (30).

3. Elément de crochet selon la revendication 1,
dans lequel les parties latérales rabattues vers le haut (21, 22) de la première partie de métal en feuille (20) et les parties latérales rabattues vers le bas (31, 32) de la seconde partie de métal en feuille (30) sont tout aussi longues dans la direction verticale.

4. Elément de crochet selon l'une quelconque des revendications précédentes,
dans lequel l'élément de crochet comprend une partie intermédiaire (12) entre les parties avant et arrière (11, 13), qui est plus étroite que les parties avant et arrière.

5. Elément de crochet selon l'une quelconque des revendications précédentes,
dans lequel les au moins deux parties de métal en feuille (20, 30) sont soudées l'une sur l'autre ou sont reliées l'une à l'autre d'une manière différente, par exemple par collage et/ou sertissage.

6. Elément de crochet selon l'une quelconque des revendications précédentes, comprenant précisément deux éléments de métal en feuille, c'est-à-dire le premier (20) et le second (30).

7. Elément de crochet selon l'une quelconque des revendications 1 à 4, comprenant trois, quatre parties de métal en feuille (20, 30) ou plus.

8. Elément de crochet selon l'une quelconque des revendications précédentes, se composant uniquement des au moins deux parties de métal en feuille (20, 30).

9. Elément de crochet selon l'une quelconque des revendications précédentes, configuré pour être utilisé dans des systèmes de support de rangement pour l'aménagement d'un magasin.
